Europäisches Patentamt

European Patent Office

Office européen des brevets

(19)

(11) Publication number: **0 178 171**
A2

# (12) EUROPEAN PATENT APPLICATION

(21) Application number: 85307247.8

(22) Date of filing: 10.10.85

(51) Int. Cl.⁴: **B 60 N 1/06**

(30) Priority: 12.10.84 US 660209

(43) Date of publication of application: 16.04.86
Bulletin 86/16

(84) Designated Contracting States: DE FR GB IT NL

(71) Applicant: DEERE & COMPANY, 1 John Deere Road, Moline Illinois 61265 (US)

(72) Inventor: Whisler, Edwin Lee, Route 1 Box 50C, Peosta Iowa 52068 (US)
Inventor: Griswold, Frederick Daniel, Jr., 1245 Robin Hood Drive, Dubuque Iowa 52001 (US)

(74) Representative: Pears, David Ashley, REDDIE & GROSE 16 Theobalds Road, London WC1X 8PL (GB)

(54) Adjustable armrest wiht integrated vehicle controls.

(57) The armrest comprises a forward portion (17) which is pivotally mounted by a bolt (29) of a vertical support plate (27) for adjustment of the angle of tilt of the forward portion, which carries a control lever (19) and a switch (23). The forward portion (17) is locked at its selected tilt by a wedge on a lever (47) engaging in one of a series of notches (58). A rearward portion (25) with a cushion (63) on a vertical plate (67) is adjustable both vertically and as to tilt. A bolt with friction washers extends through a forward vertical slot (69) in the cushion support plate (67) and a horizontal slot (73) in the main support plate (27). A threaded stem with a knob (87) for clamping up the plates extends through a rearward vertical slot (71) in the cushion support plate (67) and an aperture (75) in the main support plate (27).

ADJUSTABLE ARMREST WITH INTEGRATED VEHICLE CONTROLS

This invention relates to an adjustable armrest for a vehicle, especially for the operator's seat of an off-road vehicle, and of the type set forth in the introductory part of claim 1.

In the operator's station of an off-road vehicle, it is known to locate a control lever on an armrest of the operator's seat. The armrests are sized for convenient access to respective control levers by an operator of typical stature while providing adequate arm support. Because of variation in operator stature, premature fatigue can results from the utilization of conventionally sized armrests by an operator of a typical stature.

An armrest according to the introductory part of claim 1 is known from US 4 200 166. The rest is slidably adjustable fore and aft. Such a degree of adjustment is inadequate to suit all operators and it is therefore an object of this invention to provide an armrest with a much better range of adjustment.

The invention is set forth in the characterising part of claim 1.

In the preferred embodiment of the invention, a vehicle operator seat armrest includes a forward and rear section adjustably mounted on a main support plate attached to the operator seat support system. The forward section of the armrest is pivotally mounted to the support plate and carries a control lever and a electrical switch for controlling vehicle functions. Pivotally mounted on the forward section is a handle which is responsible for freeing and re-engaging an indexing wedge received in an index plate mounted to the support plate, to allow pivotal repositioning of the forward section. Repositioning of the forward section alters the angle of operator attack to the control levers.

The rear section of the armrest is composed of a cushion mounted on a cushion support plate. The cushion support plate includes a vertical portion having first and second vertical slots. The first slot aligns with a horizontal slot in the support plate. The position of the cushion support plate on the main support plate is fixed by a nut and bolt arrangement in conjunction with friction washer. The second slot aligns with an aperture in the support plate. A threaded stem portion of a knob extends through the second slot in the cushion support plate and the aperture of the support plate to receive a nut. By loosening the knob, the rear section of the armrest can be raised or lowered. Also, the horizontal slot in the support plate allows the rear section to assume varying angles of incline. The adjustment of both the forward section and rear section will allow the proper alignment between an operator's arm and the control levers to suited for an particular operator.

The invention will be described in more detail, by way of example, and with reference to the accompanying drawings, in which:

Fig 1 is a perspective view of a vehicle operator's set including armrests embodying the present invention.

Fig 2 is a sectioned, side elevational view of one of the armrests.

Fig 3 is a bottom, partially sectional view of the armrest adjustment assembly.

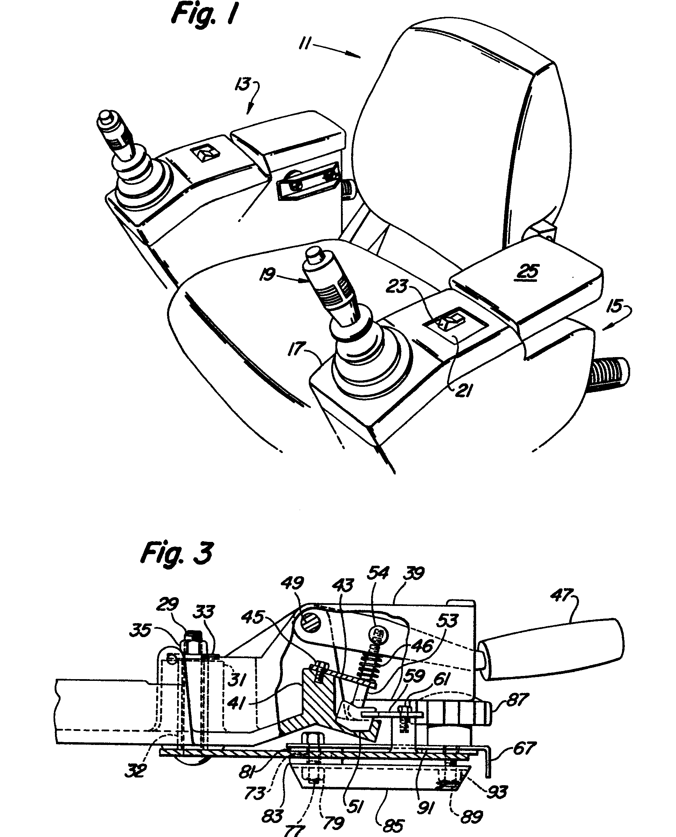

Referring to Fig 1, a vehicle operator seat 11 includes a first and second armrest 13 and 15. The armrest 13 is identical to the armrest 15 except that it is made for the opposite side of seat 11. Therefore, only the armrest 15 will be described in detail.

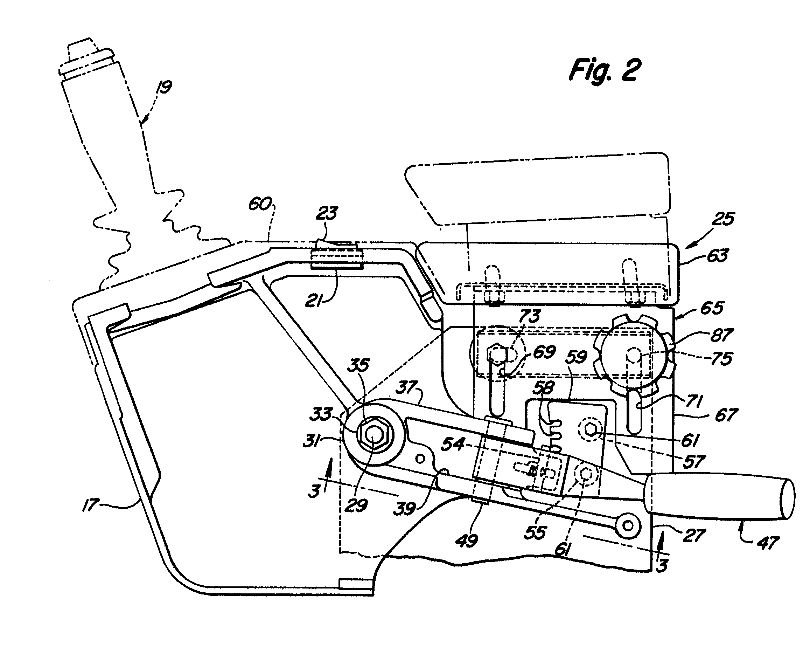

Referring to Figs 1 and 2, the armrest 15 includes a forwardly located control section 17 having mounted therein conventional hand control lever assembly 19. Also mounted to the control section 17 in a conventional manner is a switch plate 21 including an electrical switch 23 or switches. The lever 19 and switch 23 are responsible for controlling appropriate vehicle function in a conventional manner. Rearward of the control section 17 is an adjustable arm cushion 25 which is adjustable as to height and angle of incline.

Referring more particularly to Figs 2 and 3, a support plate 27 is fixed to a known seat support (not shown). The support plate 27 extends vertically to the side of the seat support. The control section 17 includes a formed, cylindrical support tube 31. A bolt 29 extends through the support plate 27, a bushing 32, the supporting tube 31, a washer 33, and nut 35. The bolt pivotally supports the support section 17 on the support plate 27. Extending rearwardly from the support tube 31 is a pair of formed paralel and opposite arms 37 and 39. A lug 41 is located roughly midway along and between the arms 37 and 39. A tongue 43 is fixed to the lug 41 to extend rearwardly, by a bolt 45. A handle 47 is pivotally mounted between the arms 37 and 39 by a pin 49. An index wedge 51 with a stem 53 is fixed in a cross pin 54 extending transversely through the handle 47. The index wedge 51 is directed inwardly toward the support plate 27. A spring 46 is placed around the stem 53 of the index wedge 51 between the tongue 43 and the handle 47. The support plate 27 also includes formed mounting posts 55 and 57. An index plate 59 is fixed on the mounting posts 55 and 57 by bolts 61. The index plate 59 includes a plurality of indexing notches 58 sized to receive the index wedge 51.

When the index wedge 51 is received in one of the indexing notch 58, the position of the control section 17 is secured. By depressing the handle 47 inwardly towards the support plate 27, the index wedge 51 is caused to dislodge from an index notch 58, thereby, allowing the operator to pivot the control section 17 about the bolt 29 for repositioning. By releasing the handle 47, the index wedge 51 is then received in another of the indexing notches 58 to secure the new position of the control section 17. By so doing, the top surface 60 of the control section 17 and necessarily the control lever 19 assume a new angle relative to the horizontal.

The arm cushion 25, located rearwardly of the control section 17 is composed of a cushion 63 fixed to a cushion support plate 65 having a vertical portion 67. The cushion support plate portion 67 includes first and second slots 69 and 71, each slot extending in a generally vertical direction. A third slot 73 extends horizontally in the support plate 27. The support plate 27 also includes an aperture 75. To attach the cushion support plate 65 to the main support plate 27, a bolt 77 extends through the first slot 69 in the cushion support plate 67. The bolt 77 then extends through a first friction washer 81, the horizontal slot 73 of support plate 27, a second friction washer 83, and a channel member 85, and is secured by a self-locking nut 79. the friction washer 83 has a thickness about twice that of the friction washer 81.

A knob 87 has a threaded stem 89. The stem 89 extends through the slot 71 of the cushion support plate 65, a washer 91, the aperture 75 in the main support plate 65 and the channel member 85. A nut 93 is secured on the stem 89 with a cotter pin to prevent losing the knob 87.

The arm cushion 25 can be raised and titled for adjusting the height and angle of incline of the arm cushion 25 to be complementary to the control seciton 17. Tilting of the arm cushion 25 is accomplished by allowing the bolt 77 to be slidably displaced in slot 73. Securing the arm cushion 25 in a new position is accomplished by tightening the knob 87 which produces a clamping effect through the support plate 69 and channel member 85.

With minor alterations in the configurations of the forward section 17 and the cushion 63, the electrical switch plate 21 carrying the switch 23 can be mounted on the cushion 63.

0178171

- 5 -
CLAIMS

1. An adjustable armrest for a vehicle, comprising an upright, main support plate (27) flanking a seat, and a rest (17, 25) adjustably mounted on the support plate and having a control member (19) mounted forwardly thereon for grasping with the arm on the rest, characterised in that the rest (17, 25) comprises a forward portion (17) carrying the control member (19) and pivotally mounted on the support plate (27) for tilting adjustment about a transverse axis (29), and a cushioned rearward portion (25) mounted on the support plate (27) so as to be adjustable both vertically and in angle of tilt about a second transverse axis.

2. An adjustable armrest according to claim 1, characterised in that the forward portion (17) has an elongated handle (47) pivotally mounted thereon and actuating an index wedge (51) engageable in any one of a series of notches (58) in an index plate (59) fixed to the support plate, for locking the forward portion in a selected tilt position.

3. An adjustable armrest according to claim 2, characterised in that the handle (47) is pivotal about a vertical axis (49), is biased by a spring (46) away from the support plate (27) to urge the wedge (51) into a notch (58) and is movable against the bias towards the support plate to disengage the wedge.

4. An adjustable armrest according to claim 1, 2 or 3, characterised in that the rearward portion (25) comprises a vertical cushion support plate (67) with forward and rearward horizontally spaced vertical slots (69, 71) therein, a bolt (77) with a friction washer (81) extending through the forward slot (69) and a horizontal slot (73) in the main support plate, and a clamping knob (87) having a stem (89) extending through the rearward slot (71) and an aperture (75) in the main support plate.

5. An adjustable armrest according to claim 4, characterised in that the bolt (77) extends through the cushion support plate (67), a

- 6 -

first friction washer (81), the main support plate (27), a second friction washer (83) and a channel member (85) engaged by a nut (79) on the bolt, and in that the stem (89) extends through the cushion support plate (67), a third friction washer (81), the main support plate (27), and the channel member (85) engaged by another nut (93) on the stem.

6.    An adjustable armrest according to any of claims 1 to 5, characterised by a switch (23) mounted on the forward portion (17).

7.    An adjustable armrest according to any of claims 1 to 5, characterised by a switch (23) mounted on the rearward portion (25).

**Fig. 1**

**Fig. 3**

**Fig. 2**

2/2

017817 1